# EUROPÄISCHE PATENTSCHRIFT

(11) **EP 2 119 365 B1**
(45) Veröffentlichungstag und Bekanntmachung des Hinweises auf die Patenterteilung: **16.08.2017**
(21) Anmeldenummer: 08008873.5
(22) Anmeldetag: 13.05.2008
(51) Int. Cl.: A23C 9/12, A61K 39/00

(54) **FERMENTATIONSPROZESS**
FERMENTATION PROCESS
PROCÉDÉ DE FERMENTATION

(43) Veröffentlichungstag der Anmeldung: 18.11.2009
(73) Patentinhaber: Glycotope GmbH, 13125 Berlin (DE)
(72) Erfinder: Goletz, Steffen, Dr., 16548 Glienicke (DE); Ulsemer, Philippe, Dr., 16552 Schildow (DE)
(74) Vertreter: Roth, Carla

(56) Entgegenhaltungen:
- EP-A- 1 371 735
- WO-A-00/41576
- WO-A-2007/124992
- WO-A-2008/055702
- US-A1- 2004 029 127
- MARSHALL, V. M.: "Gut-Derived Organisms for Milk Fermentations" JOURNAL OF CHEMICAL TECHNOLOGY AND BIOTECHNOLOGY, Bd. 51, Nr. 4, 1991, Seiten 548-553, XP002499586
- RIEMER ANGELIKA B ET AL: "Induction of IgG antibodies against the GD2 carbohydrate tumor antigen by vaccination with peptide mimotopes" EUROPEAN JOURNAL OF IMMUNOLOGY, WILEY - V C H VERLAG GMBH & CO. KGAA, DE, Bd. 36, Nr. 5, 1. Januar 2006 (2006-01-01), Seiten 1267-1274, XP002434806 ISSN: 0014-2980

## Beschreibung

Die vorliegende Erfindung betrifft ein Verfahren zur Herstellung eines fermentierten Lebensmittels sowie geeignete Verarbeitungshilfsstoffe, die die Herstellung eines fermentierten Lebensmittels ermöglichen. Darüber hinaus werden fermentierte Lebensmittel bereitgestellt.

Fermentierte Lebensmittel wie beispielsweise Joghurt, Käse, Rohwurst und sauer fermentiertes Gemüse sind ein integraler Bestandteil unserer Nahrung. Verschiedene Verfahren werden zur Herstellung fermentierter Lebensmittel eingesetzt. Traditionelle Fermentationsverfahren beruhen beispielsweise auf der spontanen Fermentation (beispielsweise Kakao, Kaffee) oder werden durch die Zugabe von Mikroorganismen eingeleitet (beispielsweise alkoholische Gärung, Essigsäuregärung und Milchsäuregärung). Moderne Fermentationsverfahren basieren auf der Zugabe von Starterkulturen zu dem jeweiligen Lebensmittel-Rohstoff (beispielsweise der Milch zur Herstellung von Joghurt oder Käse). Starterkulturen bieten verschiedene Vorteile gegenüber traditionellen Herstellungsprozessen. Zum einen werden wirtschaftliche Verluste durch weniger Fehlproduktionen und zeitliche Verkürzung der Produktionsprozesse vermieden. Darüber hinaus können die Rohstoffe in der Regel besser umgesetzt werden. Da auch eine Mischung verschiedener Starterkulturen eingesetzt werden kann, lassen sich auch oftmals bessere Ergebnisse bezüglich Geschmack, Sicherheit und Homogenität erzielen. So können Erzeugnisse produziert werden, die ohne eine gezielte Beeinflussung des Produktionsprozesses sonst nicht möglich wären. In der Regel werden vor Zugabe der Starterkulturen sämtliche Mikroorganismen im Rohstoff abgetötet, beispielsweise durch Pasteurisierung.

Ein wesentliches Ziel bei der Entwicklung und Verbesserung der bekannten Fermentationsprozesse ist die Entwicklung und Auswahl geeigneter Mikroorganismen für den Fermentationsprozess, da diese den Fermentationsprozess entscheidend beeinflussen. Die eingesetzten Mikroorganismen bestimmen aufgrund ihrer Stoffwechselaktivität beispielsweise das Aroma, den Säuerungsgrad und/oder die Farbe des fertigen Produktes.

Darüber hinaus haben Mikroorganismen ein großes Potential für den Ernährungsbereich, wenn sie einen positiven Einfluss auf den Gesundheitszustand oder den Stoffwechsel ausüben. Ein bekanntes Beispiel für fermentierte Lebensmittel mit positivem Einfluss auf die Gesundheit des Konsumenten sind probiotische Lebensmittel. Ein Probiotikum ist eine Präparation aus lebensfähigen Mikroorganismen, die, in ausreichenden Mengen konsumiert, einen gesundheitsfördernden Einfluss auf den Konsumenten haben. Am längsten angewendet werden probiotische Milchsäurebakterien, aber auch Hefen und andere Spezies sind in Gebrauch. Nachdem ursprünglich primär probiotische Joghurterzeugnisse angeboten wurden, sind seit einiger Zeit weitere Lebensmittel wie beispielsweise Quark, Käse oder Wurst, die probiotische Bakterien enthalten, auf dem Markt. Probiotische Erzeugnisse, wie beispielsweise Joghurt, können auf verschiedene Arten hergestellt werden. Üblicherweise wird zunächst der Joghurt auf herkömmliche Weise unter Zusatz der üblichen Starterkulturen hergestellt und nachträglich der probiotische Bakterienstamm zum fermentierten Produkt zugesetzt. Je nach verwendetem Bakterienstamm kann die Fermentation der Milch jedoch auch durch den probiotischen Bakterienstamm selbst erreicht werden; in diesem Fall enthält das Produkt ausschließlich den probiotischen Bakterienstamm.

WO 00/41576 A1 betrifft mikrobielle Präparationen, die ein erhöhtes Wachstums- und Ausbeutepotential bzw. eine erhöhte Überlebensrate aufweisen, sowie diese Präparationen enthaltende Produkte. WO 2007/124992 A1 betrifft ein Verfahren zur Herstellung essbarer Produkte mit einer omega-3-Fettsäure-Quelle. US 2004/0029127 A1 betrifft die Verwendung von Lactobacillus casei in Nahrungsmitteln zur Erhöhung der Immunantwort gegen pathogene Mikroorganismen. Marshall (1991) Journal of Chemical Technology and Biotechnology 51, 543-553 beschreibt Darm-Organismen zur Milchfermentation. EP 1 371 735 A1 betrifft Untersuchungsverfahren zum Nachweis von Bifidobakterien aus fermentierten Milchprodukten im Darm. Riemer et al. (2006) European Journal of Immunology 36, 1267-1274 beschreiben die Induktion von IgG-Antikörpern gegen GD2-Kohlenhydrat-Tumorantigene durch Impfung mit Peptid-Mimotope. WO 2008/055702 A1 betrifft Mikroorganismen, die kohlenhydrat-spezifische zelluläre Immunität induzieren können.

Es besteht ein großer Bedarf zur Bereitstellung weiterer Mikroorganismen, die entweder anstelle von oder in Kombination mit bekannten Mikroorganismen zur Herstellung von fermentierten Lebensmitteln eingesetzt werden können.

Der vorliegenden Erfindung liegt daher die Aufgabe zugrunde, geeignete Verfahren zur Herstellung von fermentierten Lebensmitteln bereitzustellen.

Gelöst wird diese Aufgabe durch ein Verfahren zur Herstellung eines fermentierten Lebensmittels, wobei ein Lebensmittel-Rohstoff mit einer Starterkultur zur Fermentation zusammengebracht wird. Das erfindungsgemäße Verfahren ist dadurch gekennzeichnet, dass wenigstens ein Mikroorganismus der Gattung Bacteroides als Starterkultur eingesetzt wird und dass das Verfahren die folgenden Verfahrensschritte umfasst:
- Animpfen des Lebensmittel-Rohstoffes mit der Starterkultur; und
- Inkubation des angeimpften Lebensmittel-Rohstoffes unter anaeroben Bedingungen bei 30 bis 50°C.

Bevorzugt weist der Mikroorganismus wenigstens eine Zelloberflächenstruktur auf, die einer humanen Kohlenhydratstruktur, insbesondere einem humanen Kohlenhydratantigen entspricht.

Kohlenhydrate sind wichtige Zellmarker, die charakteristisch für verschiedene Zelltypen und Gewebe sind. Bestimmte Kohlenhydratstrukturen - auch Kohlenhydratantigene genannt - treten oftmals in Kombination mit Krankheiten auf. Beispielsweise ist eine anormale Glykosylierung ein typisches Kennzeichen von Krebszellen. Diese anormalen Kohlenhydratstrukturen finden sich kaum oder gar nicht auf gesunden humanen Zellen, sondern treten erst bei einer krankhaften Veränderung der Zellen auf. Sie sind daher charakteristische Marker (Antigene) für krankhaft veränderte Zellen. Im Stand der Technik gab es daher Bestrebungen, basierend auf Kohlenhydratantigenen Vakzine herzustellen. Jedoch sind Kohlenhydratstrukturen nur schwach immunogen und daher nicht per se geeignet, eine ausreichende Immunantwort auszulösen. Eine effektive Immunantwort ist jedoch essentiell, um beispielsweise einen protektiven Effekt gegen das jeweilige Kohlenhydratstrukturantigen aufzubauen. Sofern das Immunsystem erstmalig in Kontakt mit dem entsprechenden Kohlenhydratantigen gelangt und eine Immunantwort ausbildet, würde der Organismus aufgrund der Immunisierung besser in der Lage sein, bei erneutem Auftreten der entsprechenden Kohlenhydratstruktur (beispielsweise bei einer Krebszelle) zu reagieren und entsprechend eine Immunabwehr in Gang zu setzen. Daher ist es vorteilhaft, wenn eine effektive, Kohlenhydratstruktur spezifische Immunantwort ausgelöst werden kann. Entsprechende gesundheitsfördernde Effekte können mit den bevorzugten erfindungsgemäß verwendeten Mikroorganismen erzielt werden, da diese ausreichend immunogen sind und wenigstens eine Zelloberflächenstruktur aufweisen, die einer humanen Kohlenhydrastruktur entspricht. Darüber hinaus können diese Mikroorganismen in vorteilhafter Weise als Verarbeitungshilfsstoff, also beispielsweise als Starterkultur oder als Zusatz im Anschluss an die Fermentierung bei der Herstellung von fermentierten Lebensmitteln eingesetzt werden.

Gemäß einer Ausführungsform ist die humane Kohlenhydratstruktur ein krankheitsspezifisches Antigen, insbesondere ein tumorassoziiertes Antigen. Die Zelloberflächenstruktur des Mikroorganismus kann gemäß einer Ausführungsform die gewünschte humane Kohlenhydratstruktur aufweisen. Jedoch ist es ausreichend, wenn die Zelloberflächenstruktur der humanen Kohlenhydratstruktur entspricht und entsprechend nicht identisch mit ihr ist. Die Glykosylierung in Mikroorganismen unterscheidet sich grundlegend von der Glykosylierung in Menschen oder Tieren. Jedoch wurde überraschenderweise festgestellt, dass Mikroorganismen in der Lage sind, "humane" Kohlenhydratantigene als Zelloberflächenstruktur zu exprimieren. Diese Zelloberflächenstrukturen unterscheiden sich oftmals strukturell von den eigentlichen humanen Kohlenhydratstrukturen, weisen jedoch eine Grundstruktur auf, die der korrespondierenden humanen Kohlenhydratstruktur in ihrer Struktur/Konformation entspricht. Solche "entsprechenden" Zelloberflächenstrukturen imitieren daher die originäre humane Kohlenhydratstruktur und sind von dem Begriff "eine Zelloberflächenstruktur, die einer humanen Kohlenhydratstruktur entspricht", umfasst. Eine solche, der humanen Kohlenhydratstruktur entsprechende Zelloberflächenstruktur kann entweder ebenfalls eine Kohlenhydratstruktur, jedoch aber auch ein Polypeptid, Peptid, Lipid oder eine Kombination davon sein. Entscheidend ist, dass diese Zelloberflächenstrukturen eine Konformation aufweisen, die der korrespondierenden humanen Kohlenhydratstruktur entspricht. Das Vorhandensein einer solchen Zelloberflächenstruktur kann bspw. auf einfache Weise durch den Einsatz von Antikörpern getestet werden, die spezifisch die humane Kohlenhydratstruktur erkennen und entsprechend binden. Weist der Mikroorganismus eine Zelloberflächenstruktur auf, die der gewünschten humanen Kohlenhydratstruktur entspricht, wird diese ebenfalls von dem die humane Kohlenhydratstruktur spezifisch bindenden Antikörper erkannt und entsprechend gebunden. Auf diese Weise kann geprüft werden, ob der Mikroorganismus eine Zelloberflächenstruktur aufweist, die einer humanen Kohlenhydratstruktur entspricht. Durch einen entsprechenden Test können ferner geeignete Mikroorganismen, die die gewünschte humane Kohlenhydratstruktur bzw. ein Mimik davon aufweisen, identifiziert bzw. selektiert werden. Neben Antikörpern können auch andere Bindemoleküle zum Einsatz kommen, die in der Lage sind, Kohlenhydratstrukturen mit einer ausreichenden Spezifität zu binden. Nicht limitierende Beispiele sind Lektine und Selektine.

Die nachfolgenden Tabellen 1 und 2 geben eine Übersicht über wichtige humane krankheitsspezifische Kohlenhydratstrukturen wieder und offenbaren geeignete Binder wie bspw. Antikörper, die es ermöglichen, einen Mikroorganismus auszuwählen zu identifizieren, der wenigstens eine Zelloberflächenstruktur aufweist, die der aufgeführten humanen Kohlenhydratstrukturen entspricht.

**Tabelle 1**

| ***Krankheit*** | ***Kohlenhydratantigen*** |
|---|---|
| Melanoma | GM2, GD2, GD3L, GD3, 9-O-Acetyl GD2, 9-O-Acetyl GD3 |
| B cell lymphoma | GM2, GD2 |
| Small-cell lung cancer | GM2, Fucosyl GM1, Globo H, Polysialylsäure, sLe a (sialyl-Lewis a) |
| Brustkrebs | GM2, Globo H, TF, Core-1, Galbeta1-3GalNAc-, Le y (Lewis-Y) |
| Prostatakrebs | GM2, Globo H, Tn, sTn, TF, Le y, sLe a, Core-1 |
| Lungenkrebs | GM2 Globo H, Le y, Core-1 |
| Darmkrebs | GM2, sTn, TF, Le y, Core-1, |
| Ovarialkrebs | GM2, Globo H, sTn, TF, Le y, Core-1 |
| Magenkrebs | GM2, Le y, Le a, sLe a, Core-1 |
| Neuroblastoma, | GM2, GD2, GD3L, Polysialylsäure |
| Sarcoma | GM2, GD2, GD3L, GD3 |
| Pankreaskrebs | sLe a, sLe x (Sialyl Lewis x) |
| Gastrointestinalkrebs | sLe a, sLe x |
| CD4+CD56+ neoplasia | sLe x (CD15) |

**Tabelle 2**

| ***Kohlenhydratstruktur*** | ***Kohlenhydratstruktur bindende Moleküle*** | |
|---|---|---|
| | *Lektin* | *Monoklonaler Antikörper* |
| TF oder Core-1 | Galektin, C-typische Lektine von Makrophagen, Sialoadhesin, PNA ³, Jacalin ³, MAL ³, EEL ³, ECL ³ | Nemod-TF1 ², Nemod-TF2 ², A78-G/A7 ², HB-T1 ¹¹, HH8 ¹⁴, A68-B/A11 ² |
| Tn | Galektin, C-typische Lektine von Makrophagen, Sialoadhesin, BPL ³, DBA ³, GSL I ³, MPL ³, RCA ³, SJS ³, SBA ³ | HB-Tn1 ¹¹ |
| Sialyl-Tn | | CA 72-4 ¹, TKH2 ¹, HB-STn1 ¹¹ |
| Globo-H | | A69-A/E8², VK9 ¹³ |
| Lewis-Y | | A46-B/B10 ², A63-D/B12 ², A51-B/A6 ², A70-C/C8 ², A70-A/A9 ² |
| sialyl-Lewis-A | E-Selektin | CA 195 ¹, CA 50 ¹, 121SLE ¹² |
| sialyl-Lewis-X | E-Selektin | CA19-9 ¹ , KM931 ¹⁰, T174 ¹⁰ |
| Lewis-X | | 73-30 ⁴, BG-7 (P12) ⁴ |
| Lewis-A | | CA 195 ¹, MAB2108 (7LE) ⁴, BG-5 (T174) ⁴, PR5C5 ¹² |
| Lewis-B | | MAB2102 (2.25LE) ⁴, BG-6 (T218) ⁴ |
| Sialylierte Typ 1 Kette | | CA 242 ¹ |
| sLac | | CA 50 ¹, DU-PAN-2 ¹ |
| Polysialylsäure | MAL II ³, SNA ³ | Mab735 ⁹, 5A5 ¹³ |
| Fucosyl GM1 | | F12 ¹³ |
| GM2 | | BP283 ⁵ , PGNX ¹³ |
| GD2 | | Mab 126 ¹, 3F8 ⁸, ME 36.1¹ |
| GD3 | | R24 ⁶, MAB2053 ⁷, ME 36.1 ¹ |
| 9-O-Acetyl GD2 | | 3F8 ⁸ |
| 9-O-Acetyl GD3 | | ME3.11 ¹ |

| | | |
|---|---|---|
| ¹ Orntoft et al. Electrophoresis 1999, 20, 362-371 ² Glycotope GmbH Berlin, www.glycotope.com ³ vector laboratories, www.vectorlabs.com ⁴ Amano et al. Clin Diagn Lab Immunol 1997(Sep), 540-544 ⁵ Acris Antibodies GmbH, www.acris-antibodies.com ⁶ Reaman et al. Cancer Res 1990 50 (1): 202-5 ⁷ CHEMICON International, Inc. www.chemicon.com ⁸ Ye et al. 1992; 50 (2): 197-201 ⁹ Husmann et al. J Histochem Cytochem 1990; 38 (2):209-15 ¹⁰ Calbiochem www.Calbiochem.com ¹¹ DakoCytomation Dako Deutschland GmbH, Germany, www.dakogmbh.de ¹² Dianova, Hamburg, Germany ¹³ Livingston et al. Cancer Immunol Immunother (2005) 54: 1018-1025 ¹⁴ Clausen et al. Mol Immunol(1988) 25: 199-204 | | |

Weitere Verfahren zur Selektion geeigneter Mikroorganismen mit Zelloberflächenstrukturen, die einer humanen Kohlenhydratstruktur entsprechen, sind ferner in den Internationalen Anmeldungen PCT/EP07/009765 und PCT/EP2007/009766 offenbart, die hiermit vollumfassend zum Gegenstand der vorliegenden Offenbarung gemacht werden.

Gemäß einer Ausführungsform weist der Mikroorganismus eine Zelloberflächenstruktur auf, die einer humanen Kohlenhydratstruktur entspricht, die ausgewählt ist aus der Gruppe von TF, Core-1, Tn, Sialyl-Tn, Sialyl-TF, Globo-H, Lewis-Y, Sialyl-Lewis-A, Sialyl-Lewis-X, Polysialylsäure, Lewis-X, GM2, GD2, GD3, 9-O-acetyl GD3, GD3L, Fucosyl GM1, Fucosyl GM1, Lewis-A, Lewis-B, sLac, sialysierte Typ 1 Kette (sialylated type 1 chain), CA 19-9 Antigen, CA 72-4 Antigen and CA-50 Antigen. Der Mikroorganismus wird daher vorzugsweise von wenigstens einem Binder, wie in Tabelle 2 gezeigt, erkannt und gebunden. Ein solcher Test kann als einfacher Nachweis dafür dienen, dass der Mikroorganismus eine entsprechende Zelloberflächenstruktur trägt.

Gemäß einer Ausführungsform weist der Mikroorganismus eine Zelloberflächenstruktur auf, die einer humanen Kohlenhydratstruktur entspricht, die entweder TF oder Core-1 ist. Das Thomsen-Friedenreich-Antigen (TF) ist eine bekannte Kohlenhydratstruktur, die im Stand der Technik als Tumorantigen bekannt ist. TF existiert in zwei Formen, nämlich TFalpha und TFbeta, die entweder an Proteine oder Glykolipide gebunden sein kann.

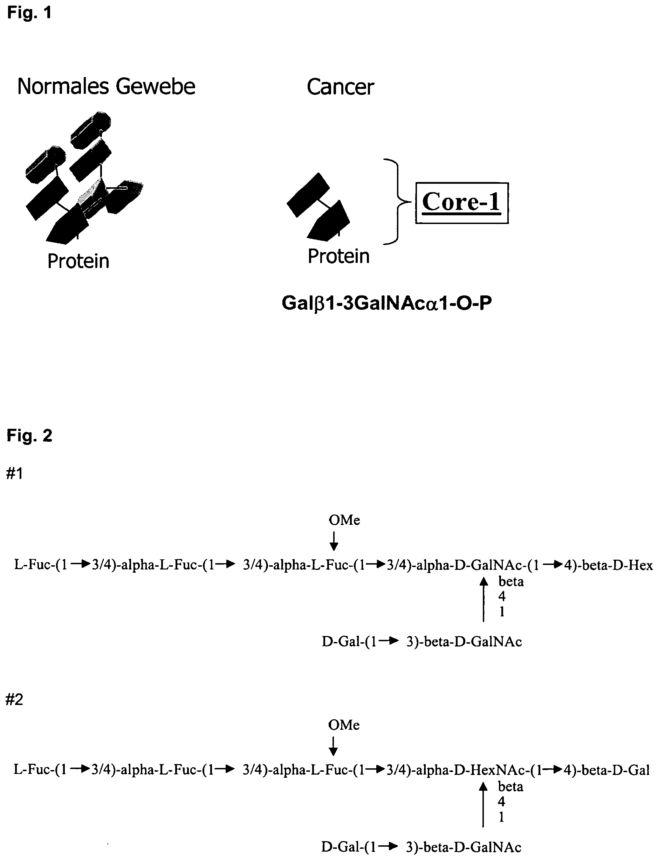

Core-1 ist das Disaccharid Galbeta1-3 GalNAc, das O-glykosydisch in einer alpha-anomeren Konfiguration an die Hydroxy-Aminosäuren Serin oder Threonin von Proteinen in Karzinomazellen gebunden ist. Core-1 entspricht der TFalpha Struktur von Thomsen-Friedenreich und ist ausschließlich an Proteine auf Tumoren gebunden. Entsprechend sind die Begriffe Core-1 und Thomsen-Friedenreich nicht gleichzusetzen, da Core-1 einer Unterstruktur von Thomsen Friedenreich entspricht. Das Core-1-Antigen ist üblicherweise durch andere Kohlenhydratstrukturen im gesunden Gewebe maskiert; es liegt jedoch in der Mehrzahl der Karzinomas und in einigen nicht-epithelialen Krebssorten frei. Das Core-1-Antigen ist daher ein spezifisches Pankarzinoma-Antigen (siehe auch Fig. 1 zur Veranschaulichung).

Core-1 ist entsprechend ein wichtiges Tumorantigen. Es ist exprimiert auf über 60 % der primären Darmkarzinomas und über 90 % von Lebermetastasen von Darmkrebs sowie in der Mehrzahl der Karzinomas von anderen Krebsarten einschließlich Brust, Lunge, Ovarial, Prostata und anderen gastrointestinalen Krebsarten, wie beispielsweise gastritischen und pankreatischen Karzinomas. Aufgrund der weiten Verbreitung dieses Antigens ist es vorteilhaft, einen Mikroorganismus bereitzustellen, der eine Zellobertlächenstruktur aufweist, die Core-1 entspricht. Entsprechend wird gemäß einer Ausführungsform der vorliegenden Erfindung wenigstens ein Mikroorganismus zur Herstellung eines fermentierten Lebensmittels eingesetzt, der wenigstens eine Zelloberflächenstruktur aufweist, die Core-1 entspricht. Dadurch, dass das fermentierte Lebensmittel den entsprechenden Core-1 positiven Mikroorganismus aufweist, kann durch den Verzehr des fermentierten Lebensmittels eine Immunantwort gegen Core-1 ausgelöst werden, wodurch ein gewisser protektiver und damit gesundheitsfördernder Effekt auftritt. Dies gilt entsprechend für Mikroorganismen, die Zelloberflächenstrukturen aufweisen, die anderen krankheitsassoziierte humanen Kohlenhydratstrukturen entsprechen.

Gemäß einer Ausführungsform wird der Mikroorganismus, der wenigstens eine Zelloberflächenstruktur aufweist, die Core-1 entspricht, durch wenigstens einen, vorzugsweise zwei Core-1 spezifische Antikörper erkannt bzw. gebunden, der ausgewählt ist aus der Gruppe bestehend aus
Nemod - TF1
Nemod - TF2
A78-G/A7
HB-T1
HH8.

Vorzugsweise ist die Bindung der Core-1 spezifischen Antikörper Periodat sensitiv, d.h., dass die Bindung durch eine Periodat-Behandlung reduziert wird. Vorzugsweise wird der Mikroorganismus durch NEMOD-TF2 oder A78-G/A7 und NEMOD-TF1 jedoch nicht durch den Antikörper A68-B/A11 gebunden. Ein solches Bindungsprofil ist besonders vorteilhaft, da es dem Bindungsprofil einer humanen Krebs-assoziierten Core-1 Struktur entspricht.

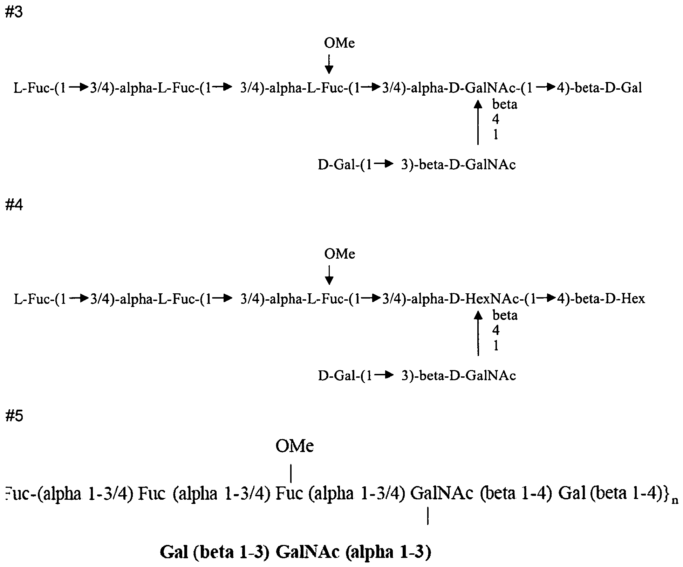

Gemäß einer Ausführungsform wird wenigstens ein Mikroorganismus zur Herstellung eines fermentierten Lebensmittels eingesetzt, der wenigstens eine Kohlenhydratstruktur trägt, die ausgewählt ist aus der Gruppe der Kohlenhydratstrukturen Nr. 1, 2, 3, 4 und/oder 5 der Fig. 2.

Mit der Erfindung wird ein Verfahren zur Herstellung eines fermentierten Lebensmittels zur Verfügung gestellt, wobei der Lebensmittel-Rohstoff mit einer Starterkultur zur Fermentation zusammengebracht wird, wobei das Verfahren unter anderem dadurch gekennzeichnet ist, dass wenigstens ein Mikroorganismus der Gattung Bacteroides zugegeben wird. Es hat sich herausgestellt, dass Mikroorganismen der Gattung Bacteroides einen positiven Einfluss auf die Herstellung und die Eigenschaften des fermentierten Lebensmittels haben. Dies war überraschend, da diese Gattung bislang nicht zur Herstellung von fermentierten Lebensmitteln eingesetzt wurde. Dass Mikroorganismen der Gattung Bacteriodes als Verarbeitungshilfsstoff und insbesondere als Starterkulturen für fermentierte Lebensmittel eingesetzt werden können, war daher äußerst überraschend. Bei der Gattung Bacteriodes handelt es sich um anaerobe, pleomorphe gramnegative Stäbchenbakterien, die zur Normalflora der Schleimhäute des Intestinaltraktes gehören. Im Dickdarm findet man mehr als 10" Exemplare pro Gramm Stuhl. Vorzugsweise ist der Mikroorganismus ausgewählt aus der Bacteroides-fragilis-Gruppe und der Spezies Bacteroides ovatus. Diese Mikroorganismen weisen vorzugsweise eine Zelloberflächenstruktur auf, die einer humanen Kohlenhydratstruktur entspricht.

Gemäß einer Ausführungsform ist der Mikroorganismus ausgewählt aus den Stämmen AG6 (DSM 18726) und MU1 (DSM 18728). Diese wurden am 20. Oktober 2006 seitens der Glycotope GmbH, Robert-Rössle-Straße 10, D-13125 Berlin beim DSMZ, Inhoffenstraße 7b, D-38124 Braunschweig hinterlegt. Es hat sich herausgestellt, dass die Mikroorganismen AG6 und MU1 Zelloberflächenstrukturen aufweisen, die dem humanen Core-1 entsprechen. Ferner können erfindungsgemäß Mikroorganismen eingesetzt werden, die zu AG6 und/oder MU1 homolog sind. Ein zu AG6 oder MU1 homologer Mikroorganismus ist dadurch gekennzeichnet, dass er der Gattung Bacteroides angehört und durch wenigstens zwei Core-1 spezifische Antikörper gebunden wird. Core-1 spezifische Antikörper sind beispielsweise Nemod-TF1, Nemod-TF2, A78-G/A7, HB-T1 und HH8. Vorzugsweise wird ein homologer Mikroorganismus eingesetzt, bei dem die Bindung der Core-1 spezifischen Antikörper Periodat sensitiv ist. D.h., dass die Bindung durch eine Periodat-Behandlung reduziert wird. Einzelheiten zu den AG6 und MU1, sowie deren Wirkungen sind einschließlich ausführlicher Experimente in den Internationalen Anmeldungen PCT/EP2007/009765 und PCT/EP2007/009766 offenbart, die hiermit vollumfassend zum Gegenstand der vorliegenden Offenbarung gemacht werden.

Der erfindungsgemäß verwendete Mikroorganismus wird zum Starten des Fermentationsprozesses hinzugegeben. Starterkulturen sind vermehrungsfähige Mikroorganismen in Rein- oder Mischkultur, die Lebensmittel mit der Absicht zugesetzt werden, das Aussehen, den Geruch, den Geschmack und/oder die Haltbarkeit zu verbessern. Die nachfolgende Tabelle gibt eine Übersicht über im Stand der Technik bekannte Starterkulturen, die je nach herzustellendem fermentierten Lebensmittel eingesetzt werden können. Selbstverständlich ist dies nur eine Auswahl; es können auch andere bekannte Starterkulturen eingesetzt werden. Weitere wurden auch hier beschrieben.

**Tabelle 3**

| **Gruppe** | **Gattung** | **Lebensmittel** |
|---|---|---|
| Bakterien | Lactobacillus | Käse, Brot, Sauerkraut, Rohwurst |
| | Lactococcus | Milch, Butter, Käse |
| | Leuconostoc | Butter, Käse, Wein |
| | Pediococcus | Rohwurst, Gemüse, Sojasauce |
| | Streptococcus | Joghurt, Käse |
| | Micrococcus | Rohwurst |
| | Staphylococcus | Rohwurst |
| Hefen | Saccharomyces | alkoholische Getränke, Brot, Sojasauce |
| | Candida | Kefir, Rohwurst |
| Schimmelpilze | Penicillium | Käse, Rohwurst |
| | Aspergillus | Sojasauce, Rohschinken |

Die erfindungsgemäß verwendeten Mikroorganismen liegen im fertigen fermentierten Lebensmittel vorzugsweise (je nach eingesetztem Mikroorganismus) in einer nicht vermehrungsfähigen Form vor. Dies kann beispielsweise durch Bestrahlung der Mikroorganismen oder Erhitzen erzielt werden. Vorzugsweise werden die Mikroorganismen abgetötet. Hierbei können die Mikroorganismen entweder behandelt werden, bevor sie dem Produkt hinzugegeben werden, oder das mit den Mikroorganismen versetzte fermentierte Lebensmittel wird entsprechend behandelt. Da die bevorzugten Mikroorganismen jedoch auch in nicht vermehrungsfähigem bzw. abgetötetem Zustand nach wie vor die Zelloberflächenstruktur aufweisen, die einer humanen Kohlenhydratstruktur entspricht, können diese erfindungsgemäß verwendeten Mikroorganismen im fertigen Lebensmittel weiterhin den gesundheitsfördernden Effekt ausüben.

Die erfindungsgemäß verwendeten Mikroorganismen können als Starterkulturen eingesetzt werden, da sie überraschender Weise die Fähigkeit haben, den Fermentationsprozess in Gang zu setzen. Dies war insbesondere überraschend für Mikroorganismen der Gattung Bacteroides und insbesondere AG6 und MU1 sowie Homologe davon, da diese bislang nicht als Starterkultur zur Herstellung eines fermentierten Lebensmittels eingesetzt wurden. Dabei können die erfindungsgemäß verwendeten Mikroorganismen die einzige Starterkultur darstellen. Jedoch ist es auch möglich, die erfindungsgemäß verwendeten Mikroorganismen in Kombination mit anderen Starterkulturen einzusetzen. Dies kann vorteilhaft sein, um beispielsweise den Geschmack, den Säuerungsgrad und/oder die Konsistenz des fermentierten Produktes zu beeinflussen und wunschgemäß zu verändern. Die Stoffwechselaktivität der Bakterienkulturen erzeugt flüchtige Aromaverbindungen, wie beispielsweise Essigsäure, Diacetyl- und Acetalaldehyd, die in Verbindung mit der Acidität zu dem einzigartigen sauren oder herben Aromamerkmal des Produktes beitragen. Durch Mischung verschiedener Starterkulturen kann entsprechend eine Einstellung der gewünschten Merkmale erfolgen. Selbstverständlich werden mit der vorliegenden Erfindung auch Varianten umfasst, bei denen die erfindungsgemäß verwendeten Mikroorganismen sowohl als Starterkultur (ggf. in Kombination mit anderen Starterkulturen) als auch als Zusatz zum fermentierten Produkt eingesetzt werden. Eine solche Ausführungsform kann vorteilhaft sein, um bspw. die Menge an im fermentierten Produkt vorhandenem Mikroorganismus einzustellen bzw. zu erhöhen.

Vorzugsweise wird das Fermentationsprodukt so behandelt, dass die Mikroorganismen im fertigen fermentierten Lebensmittel in nicht vermehrungsfähiger Form vorliegen. Hierfür können die Mikroorganismen abgetötet werden, beispielsweise durch Pasteurisierung, Ultrahocherhitzen oder Sterilisation.

Mit dem erfindungsgemäßen Verfahren können die unterschiedlichsten Lebensmittel hergestellt werden. Diese können pflanzlichen Ursprungs sein, wie bspw. Bier, Wein, Sauer- oder Hefeteig oder Sojaprodukte. Sie können jedoch auch tierischen Ursprungs sein, insbesondere Milch- und/oder Fleischprodukte. Eine nicht beschränkende beispielhafte Liste von mit dem erfindungsgemäßen Verfahren herstellbaren Produkten umfasst Milchprodukte wie Sauermolke, Sauermilch/Dickmilch, Gallerte, Rahmkäse, Weichkäse, Schnittkäse, Hartkäse, Schmelzkäse, Quark, Sauermilchkäse, Kochkäse, Kefir, Ymer, Avran, Lasse, Joghurt, Fruchtjoghurt, Süßmolke, Molkenbutter, Frischkäse, Mozzarella, Fetakäse, Molkenpulver, Sauerrahm, Creme Fraiche, Mascapone, Schmand, saure Sahne, Sauerrahmbutter, Butter, Butterschmelz, Halbfettbutter, mild gesäuerte Butter, Rohwürste, wie beispielsweise Salami oder Pökelfleisch, Kakao, Kaffee, Sauerteig und gesäuertes Gemüse wie beispielsweise Sauerkraut. Der Lebensmittel-Rohstoff wird entsprechend dem herzustellenden fermentierten Lebensmittel-Produkt ausgewählt.

Zur Herstellung eines fermentierten Fleischproduktes können die erfindungsgemäß verwendeten Mikroorganismen entweder alleine oder in Kombination mit üblichen Starterkulturen als Starterkultur eingesetzt werden. Insbesondere bei der Rohwurstreifung werden üblicherweise Starterkulturen eingesetzt. Diese bewirken eine Absenkung des pH-Werts und setzen die fleischeigenen und zugesetzten Zuckerstoffe in organische Säuren um. Darüber hinaus bewirken sie eine Verfestigung des Fleischeiweißes. Die Absenkung des pH-Werts bewirkt ein sinkendes Wasserbindungsvermögen. Durch die Senkung des pH-Werts wird auch eine konservierende Wirkung erreicht. Hierfür sind insbesondere Milchsäurebakterien, wie beispielsweise homofermentative Vertreter der Gattungen Lactobacillus und Pediococcus geeignet, die entsprechend in Kombination mit den erfindungsgemäß verwendeten Mikroorganismen als Starterkulturen eingesetzt werden können. Jedoch liegen die Mikroorganismen im fertigen Produkt (je nach eingesetztem Mikroorganismus) vorzugsweise in nicht vermehrungsfähiger und vorzugsweise abgetöteter Form vor (siehe oben). Zur Verkürzung der Reifungszeit bzw. zur Erzielung eines bestimmten Aromas können ferner Milchsäurebakterienstämme eingesetzt werden, die eine hohe Produktion an Milchsäure aufweisen. Zur Beeinflussung des Aromas können beispielsweise Mikroorganismen mit einer bestimmten Protease- und Lipaseaktivität eingesetzt werden, wie insbesondere Staphylokokken, Mikrokokken oder aber auch Schimmelpilze.

Das Verfahren kann den nachfolgenden Verfahrensschritt aufweisen:
Animpfen des Lebensmittel-Rohstoffes mit einer Starterkultur, enthaltend wenigstens einen Mikroorganismus, der wenigstens eine Zelloberflächenstruktur aufweist, die einer humanen Kohlenhydratstruktur entspricht. Bspw. kann der Rohstoff mit wenigstens ca. 1 x 10⁶, vorzugsweise mit ca. 1 bis 7 x 10⁹ Mikroorganismen pro ml Rohstoff angeimpft werden. Entsprechende Mengen haben sich als vorteilhaft bei der Animpfung von Milch, insbesondere mit AG6 oder MU1, erwiesen. Die Mengen können jedoch je nach Rohstoff und gewünschtem Endprodukt variieren.

Das erfindungsgemäße Verfahren weist die folgenden Verfahrensschritte auf:
Inkubation des angeimpften Lebensmittel-Rohstoffes unter anaeroben Bedingungen. Diese Verfahrensführung ist insbesondere bei Verwendung von anaeroben Bakterien als Starterkulturen, wie bspw. Bacteroides insbesondere AG6 und MU1, von Vorteil. Bspw. kann die Inkubation unter einer N2, CO2 und/oder H2 Atmosphäre erfolgen.

Inkubation des angeimpften Lebensmittel-Rohstoffes bei ca. 30 bis 50°C. Die Temperatur kann wiederum je nach verwendetem Mikroorganismus als Starterkultur, Rohstoff und gewünschtem Endprodukt variieren. Temperaturen zwischen 35 und 40°C haben sich als insbesondere vorteilhaft für die Inkubation von Bacteroides Kulturen erwiesen, insbesondere bei der Fermentation von Milch zur Herstellung von bspw. Joghurt.

Gemäß einer Ausführungsform handelt es sich bei dem fermentierten Lebensmittel um ein Milchprodukt. Dieses kann Joghurt und insbesondere ein Trinkjoghurt sein. Als Rohstoff kann ein beliebiges Milch- oder milchartiges Produkt, wie Vollmilch oder fettarme Milch, entrahmte Milch, kondensierte Milch, Trockenmagermilch, Lactose oder Sahne eingesetzt werden. Unter Milch soll hier ein milchartiges Sekret verstanden werden, das durch Melken eines beliebigen Tieres, wie bspw. Kühe, Schafe, Ziegen, Büffel oder Kamele erhalten wird. Ferner umfasst ist erfindungsgemäß, dass die Milch oder das milchartige Produkt durch Suspendieren von Magermilchpulver und/oder Vollfettmilchpulvern ein wässriges Medium hergestellt werden kann. Der Begriff fermentiertes Milchprodukt umfasst ein beliebiges Milchprodukt, einschließlich eines Milchrohstoffes wie vorstehend beschrieben und das einem beliebigen Fermentationstyp unterzogen wird, verstanden. Beispiele für fermentierte Milchprodukte, die mit dem erfindungsgemäßen Verfahren hergestellt werden können, sind oben aufgeführt. Zur Herstellung des fermentierten Milchproduktes wird ein Milchrohstoff wie oben definiert bereitgestellt. Der Milchrohstoff kann durch Pasteurisieren, Sterilisieren, Wärmebehandlung oder auf jedem anderem beliebigen geeigneten Weg vorbehandelt werden, um etwaige Keime abzutöten. Die Pasteurisierungs- und Sterilisierungsverfahren sind im Stand der Technik bekannt und bedürfen daher keiner Beschreibung. Zur Fermentation wird der Milchrohstoff mit einer Starterkultur zusammengebracht, die den erfindungsgemäß verwendeten Mikroorganismus beinhaltet. Sofern der erfindungsgemäß verwendete Mikroorganismus in Kombination mit anderen Starterkulturen zur Fermentation eingesetzt wird, wird eine geeignete Starterkultur in Abhängigkeit von dem herzustellenden Produkt ausgewählt. Geeignete Starterkulturen sind im Stand der Technik bekannt.

Die zuzusetzenden Dosen von Starterkultur und die Inkubationstemperaturen variieren in Abhängigkeit zum Beispiel von der Starterkultur und dem Milchrohstoff, die verwendet werden und von dem gewünschten Endprodukt. Der Milchrohstoff, einschließlich Starterkultur und gegebenenfalls weiteren Zusätzen wird unter den allgemein auf den fachbekannten Bedingungen fermentieren gelassen. Beispiele für Fermentationsbedingungen, die je nach eingesetztem Mikroorganismus als Starterkultur variieren können, sind Temperaturen zwischen 35 - 46° für wenigstens drei Stunden. Die Inkubation erfolgt vorzugsweise so lange, bis der gewünschte pH-Wert erreicht wird. Dieser liegt vorzugsweise im sauren Bereich, vorzugsweise unterhalb von pH 6 oder pH 5. Sofern ein lactosearmes Produkt hergestellt werden soll, kann dem Rohstoff zusätzlich Lactase zugesetzt werden, um die Lactose zu hydrolisieren.

Insbesondere können mit dem erfindungsgemäßen Verfahren Joghurts, insbesondere Trinkjoghurts hergestellt werden. Die Dicklegung der Milch beginnt ab einem pH-Wert von ca. 5,5 und endet je nach Kultur und Produkt, bspw. für einen Joghurt, bei einem pH-Wert zwischen 3,8 und 4,6 (pH der Milch: ca. 6,5). Beim Einsatz der Bakterienstämme AG6 und/oder MU1 werden pH-Werte von unter 5 erreicht. Allerdings können Produkte mit einem pH-Wert von 5,5 bereits als Trinkjoghurt eingesetzt werden. Es besteht auch die Möglichkeit, die Fermentation bei Erreichen eines bestimmten pH-Wertes abzubrechen. Der pH-Wert kann daher durch die zugesetzten Starterkulturen und die Länge des Fermentationsprozesses variiert werden.

Die Viskosität der Milch liegt bei ca. 1 mps-1. Die Viskosität eines stichfesten Joghurts liegt bei über 100 mps-1, bspw. bei 150 mps-1. Die Viskosität eines Trinkjoghurts liegt üblicherweise unterhalb von 120 mps-1. Ein Trinkjoghurt, der erfindungsgemäß die Mikroorganismen AG6 und/oder MU1 enthält, kann beispielsweise eine Viskosität von wenigstens 5 - 10 mps-1 aufweisen. Die Viskosität ist auch abhängig von der Anwesenheit von Früchten.

Wie ausgeführt kann der Säuregehalt und die Art der Säure durch den Einsatz verschiedener Starterkulturen variiert werden. Die nachfolgend in Tabelle 4 angegebenen Bakterienstämme können bspw. bei der Joghurtherstellung verwendet werden; diese produzieren die nachfolgend angegebenen Säuren.

**Tabelle 4**

| **Bezeichnung** | **Wachstumstemperatur (Optimum)** | **Stoffwechselprodukt** |
|---|---|---|
| Lactococcus lactis ssp. lactis (früher Streptococcus lactis) | 20-30°C | Milchsäure |
| Lactoc. lactis ssp. diacetilactis (früher Strept. diacetilactis) | 20-25°C | Milchsäure, Diacetyl, CO2 |
| Lactoc. lactis ssp. cremoris (früher Strept. cremoris) | 20-30°C | Milchsäure |
| Leuconostoc-Arten (Betacoccen) | 20-25°C | Milchsäure, Diacetyl, CO2, Essigsäure, Alkohol |
| Insbesondere zur Herstellung von Quark und Buttermilch geeignet | | |
| Lactobacillus delbrückii ssp. bulgaricus (früher Lactobacillus bulgaricus) | 40-45°C | Milchsäure, Acetaldehyd |
| Insbesondere zur Herstellung von Joghurt geeignet | | |
| Streptococcus thermophilus | 35-40°C | Milchsäure |
| Insbesondere zur Herstellung von Joghurt geeignet | | |

Bei der Fermentation entstehen zwei Arten von Milchsäuren: die rechtsdrehende L(+)-Milchsäure und die linksdrehende D(-)-Milchsäure. Beide Milchsäurearten sind chemisch praktisch gleich, sie unterscheiden sich jedoch hinsichtlich ihrer physikalischen Eigenschaften. Wird Milchsäure mit polarisiertem Licht bestrahlt, "dreht" rechtsdrehende Milchsäure das Licht nach rechts, linksdrehende entsprechend nach links. Welche Milchsäuren ein fermentiertes Lebensmittel enthält, hängt vor allem von der zur Herstellung verwendeten Bakterienkultur ab. Streptococcus- und Bifidobakterien bilden nahezu ausschließlich rechtsdrehende, Lactobacillus bulgaricus fast nur linksdrehende Milchsäure und Lactobacillus acidophilus bildet beide Arten von Milchsäure etwa je zur Hälfte. Während die Bakterien von Buttermilch, Sauermilch und Sauerrahm zu etwa 90 Prozent rechtsdrehende Milchsäure bilden, enthalten übliche Joghurts beide Arten in unterschiedlichen Verhältnissen zueinander. Milder Joghurt enthält vorwiegend rechtsdrehende Milchsäure.

Die rechtsdrehende Milchsäure wird im menschlichen Körper produziert und daher vom Organismus problemlos und schnell abgebaut. Die linksdrehende Milchsäure ist körperfremd und wird daher etwas langsamer verstoffwechselt. Für gesunde Menschen hat dies in der Regel keine negativen gesundheitlichen Folgen. Lediglich Säuglinge sollten in den ersten Monaten keine linksdrehende Milchsäure aufnehmen, da ihr Stoffwechsel noch nicht vollständig ausgereift ist.

Mit der vorliegenden Erfindung wird ferner ein fermentiertes Lebensmittel bereitgestellt, das nach dem beschriebenen Verfahren hergestellt werden kann.

In einer Ausführungsform wird ein fermentiertes Lebensmittel bereitgestellt, das wenigstens einen Mikroorganismus enthält, der wenigstens eine Zelloberflächenstruktur aufweist, die einer humanen Kohlenhydratstruktur entspricht. Geeignete Mikroorganismen sind oben und in den Ansprüchen im Detail beschrieben, wir verweisen auf die obigen Ausführungen. Vorzugsweise ist der Mikroorganismus ein Core-1 positiver Mikroorganismus, insbesondere AG6, MU1 oder ein homologer Mikroorganismus. Vorzugsweise trägt der eingesetzte Mikroorganismus eine Kohlenhydratstruktur, die ausgewählt ist aus der Gruppe der Kohlenhydratstrukturen Nr. 1, 2, 3, 4 und/oder 5 der Fig. 2. Das erfindungsgemäße Lebensmittel kann neben dem erfindungsgemäß verwendeten Mikroorganismus noch zusätzlich ein oder mehrere übliche Starterkulturen enthalten. Gemäß einer Ausführungsform ist jedoch ausschließlich der erfindungsgemäß verwendete Mikroorganismus als Starterkultur enthalten.

Das fermentierte Lebensmittel weist gemäß einer Ausführungsform wenigstens 10⁶ Einheiten von erfindungsgemäß verwendeten Mikroorganismen auf.

Gemäß einer Ausführungsform enthält das fermentierte Lebensmittel den erfindungsgemäß verwendeten Mikroorganismus in einer nicht vermehrungsfähigen Form, bspw. in abgetöteter Form. Diese Ausführungsform ist insbesondere vorteilhaft.

Einzelheiten wurden oben im Zusammenhang mit dem Verfahren beschrieben, wir nehmen auf die entsprechende Offenbarung Bezug.

Ein Verarbeitungshilfsstoff zur Herstellung von fermentierten Lebensmitteln kann wenigstens einen Mikroorganismusenthalten, der wenigstens eine Zelloberflächenstruktur aufweist, die einer humanen Kohlenhydratstruktur entspricht. Unter einem Verarbeitungshilfsstoff werden Stoffe verstanden, die nicht selbst als Zutat als Lebensmittel verzehrt werden, jedoch aus technologischen Gründen während der Be- oder Verarbeitung von Lebensmitteln verwendet werden und unbeabsichtigte, technisch unvermeidbare Rückstände oder Abbau- oder Reaktionsprodukte von Rückständen in gesundheitlich unbedenklichen Anteilen in für die Verbraucherin oder den Verbraucher bestimmten Lebensmitteln hinterlassen können, die sich technologisch nicht auf dieses Lebensmittel auswirken (Verarbeitungshilfsstoffe). Vorzugsweise ist der Verarbeitungshilfsstoff eine Starterkultur. Geeignete Mikroorganismen sind oben und in den Ansprüchen im Detail beschrieben, wir nehmen auf die entsprechende Offenbarung Bezug.

### BEISPIELE

Das erfindungsgemäße Verfahren wird nunmehr anhand von Beispielen noch im Detail beschrieben.

### Beispiel 1

Ein beispielhaftes Verfahren zur Herstellung eines Joghurts ist nachfolgend beschrieben. Zur Herstellung eines Joghurts wird die Milch "dickgelegt", das heißt es bildet sich eine sogenannte Gallerte. Man spricht dann auch von einem stichfesten Joghurt. Die für die Herstellung des Joghurts benötigte Milch wird auf den gewünschten Fettgehalt eingestellt, das gegebenenfalls überschüssige Milchfett kann, sofern erwünscht, durch Zentrifugation abgetrennt werden. Die Stichfestigkeit des Joghurts kann beispielsweise durch Zugabe von Milchpulver variiert werden, da so der Gehalt an Trockenmasse gesteigert werden kann. Die eingestellte Milch wird dann einem Erhitzungsverfahren zugeführt, sei es beispielsweise Pasteurisation oder Ultrahocherhitzung, so dass alle nicht erwünschten Bakterien, die im Rohstoff enthalten sind, abgetötet werden. Vorzugsweise wird die Milch ferner homogenisiert (Zerkleinerung der in der Milch enthaltenen Fettkügelchen, wodurch eine Aufrahmung verhindert wird). Danach wird die Milch auf ca. 30 - 50°, vorzugsweise 35 bis 41° abgekühlt und in einen Lagertank gefahren. In diesen Lagertank werden nun die Starterkulturen zugegeben; mit einem Rührwerk wird durchgemischt und dann lässt man die Milch bei ausgeschaltetem Rührwerk im Lagertank stehen. Nun kommt es zur sogenannten Fermentation, d.h. die Kulturen beginnen zu arbeiten. Aus dem in der Milch enthaltenen Milchzucker wird durch Vergärung Milchsäure gebildet. Diese Milchsäure führt wiederum dazu, dass sich die Milcheiweiße zusammenlagern und eine Gallerte entsteht. In dieser Zeit wird auch das Aroma gebildet, welches hauptsächlich aus den Stoffwechselprodukten der eingesetzten Starterkulturen besteht und entsprechend auch durch Kombination verschiedner Starterkulturen variiert werden kann. Übliche Stoffwechselprodukte sind beispielsweise Diacetyl, Acetalaldehyd und verschiedene Säuren. Nachdem der gewünschte pH-Wert von üblicherweise unter 5 erreicht wurde, wird wieder gerührt und damit die weitere Säuerung unterbrochen. Die Joghurtmasse wird gekühlt und für die Produktion bereitgestellt. Die Fermentation dauert in der Regel mehr als 3 Stunden, üblicherweise zwischen 6 und 25 Stunden, abhängig von den verwendeten Bakterienkulturen und der Fermentationstemperatur. Der Prozess kann auch länger gefahren werden.

Sofern ein Fruchtjoghurt hergestellt werden soll, können auch entsprechende Fruchtinhaltsstoffe zugegeben werden. Der entsprechend fertige Joghurt kann dann in Becher abgefüllt werden.

Mikroorganismen aufweisend eine Zelloberflächenstruktur, die einer humanen Kohlenhydratstruktur entspricht, können als Verarbeitungshilfsstoff so bspw. als Starterkultur eingesetzt werden.

### Beispiel 2

Eingesetzt wurde der Mikroorganismus AG6.

Das Redoxpotential der Milch wird durch Übernachtinkubation unter anaeroben Bedingungen oder durch Hocherhitzung auf 95°C auf unter +10 mV gesenkt. Zu der Milch wird Glukose in einer Menge von 2,5 - 20 g/l, vorzugsweise 5 g/l zugegeben. Die Milch wird mit 2,5 x 10⁹ - 7 x 10⁹ Bakterien/ml Milch angeimpft (vorzugsweise 5 x 10⁹ Bakterien/ml Milch). Die angeimpfte Milch wird unter anaeroben Bedingungen bzw. unter einer CO2 Atmosphäre bei 37 - 41 °C (vorzugsweise bei ca. 38 - 39°C) inkubiert. Die angeimpfte Milch weist eine Viskosität von ca. 1,5 - 2,5 mps-1 auf.

Nach ca. 10 - 20 Stunden Inkubationszeit weist die Milch eine Viskosität von ca. 5 - 50 mps-1 auf. Höhere Viskositäten können beispielsweise durch Zugabe von Stärke (beispielsweise Milchpulver) und/oder die Animpfung einer weiteren Starterkultur variiert werden. So lassen sich auch stichfeste Joghurtprodukte erzeugen.

## Patentansprüche

1. Verfahren zur Herstellung eines fermentierten Lebensmittels, wobei ein Lebensmittel
- Rohstoff mit einer Starterkultur zur Fermentation zusammengebracht wird, **dadurch gekennzeichnet, dass** wenigstens ein Mikroorganismus der Gattung Bacteroides als Starterkultur eingesetzt wird, umfassend die folgenden Verfahrensschritte:
- Animpfen des Lebensmittel-Rohstoffes mit der Starterkultur; und
- Inkubation des angeimpften Lebensmittel-Rohstoffes unter anaeroben Bedingungen bei 30 bis 50°C.

2. Verfahren nach Anspruch 1, **dadurch gekennzeichnet, dass** der Mikroorganismus wenigstens eine Zelloberflächenstruktur aufweist, die einer humanen Kohlenhydratstruktur entspricht.

3. Verfahren nach Anspruch 1 oder 2, **dadurch gekennzeichnet, dass** wenigstens ein Mikroorganismus zugesetzt wird, der ein oder mehrere der folgenden Merkmale aufweist:
a. der Mikroorganismus weist wenigstens eine Zelloberflächenstruktur auf, die einer humanen Kohlenhydratstruktur entspricht, die ein krankheitsspezifisches Antigen ist; und/oder
b. der Mikroorganismus weist wenigstens eine Zelloberflächenstruktur auf, die einer humanen Kohlenhydratstruktur entspricht, die ein tumorassoziiertes Antigen (TAA) ist; und/oder
c. der Mikroorganismus weist wenigstens eine Zelloberflächenstruktur auf, die einer humanen Kohlenhydratstruktur entspricht, die ausgewählt ist aus der Gruppe von TF, Core-1, Tn, Sialyl-Tn, Sialyl-TF, Globo-H, Lewis-Y, Sialyl-Lewis-A, Sialyl-Lewis-X, Polysialylsäure, Lewis-X, GM2, GD2, GD3, 9-O-acetyl GD3, GD3L, Fucosyl GM1, Fucosyl GM1, Lewis-A, Lewis-B, sLac, sialysierte Typ 1 Kette (sialylated type 1 chain), CA 19-9 Antigen, CA 72-4 Antigen und CA-50 Antigen; und/oder
d. der Mikroorganismus ist ausgewählt aus der Bacteroides-fragilis-Gruppe und der Spezies Bacteroides ovatus und/oder
e. der Mikroorganismus weist wenigstens eine Zelloberflächenstruktur auf, die Core-1 entspricht und durch wenigstens einen, vorzugsweise zwei Core-1 spezifischen Antikörper gebunden wird, der ausgewählt ist aus der Gruppe bestehend aus
Nemod - TF1
Nemod - TF2
A78-G/A7
HB-T1
HH8; und/oder
f. der Mikroorganismus wird durch NEMOD-TF2 oder A78-G/A7 und NEMOD-TF1, jedoch nicht durch den Antikörper A68-B/A11 gebunden; und/oder
g. der Mikroorganismus weist wenigstens eine Kohlenhydratstruktur auf, die ausgewählt ist aus der Gruppe der Kohlenhydratstrukturen Nr. 1, 2, 3, 4 und/oder 5 der Fig. 2.

4. Verfahren nach einem der Ansprüche 1 bis 3, **dadurch gekennzeichnet, dass** der Mikroorganismus der Gattung Bacteroides ausgewählt ist aus der Gruppe bestehend aus AG6 (DSM 18726), MU1 (DSM 18728) und/oder AG6 oder MU1 homologen Mikroorganismen, die **dadurch gekennzeichnet sind, dass** sie der Gattung Bacteroides angehören und durch wenigstens zwei Core-1 spezifische Antikörper gebunden werden, die ausgewählt sind aus der Gruppe bestehend aus
Nemod - TF1
Nemod - TF2
A78-G/A7
HB-T1
HH8.

5. Verfahren nach einem der Ansprüche 1 bis 4, **dadurch gekennzeichnet, dass** der Mikroorganismus der Gattung Bacteroides als einzige Starterkultur oder in Kombination mit wenigstens einer weiteren Starterkultur eingesetzt wird.

6. Verfahren nach einem oder mehreren der Ansprüche 1 bis 5, **dadurch gekennzeichnet, dass** zumindest die Mikroorganismen der Gattung Bacteroides im fertigen Lebensmittel in nicht vermehrungsfähiger Form vorliegen.

7. Verfahren nach einem oder mehreren der Ansprüche 1 bis 6, **dadurch gekennzeichnet, dass** das fermentierte Produkt pasteurisiert, sterilisiert und/oder erhitzt wird.

8. Verfahren nach einem oder mehreren der Ansprüche 1 bis 7, **dadurch gekennzeichnet, dass** die Inkubation des angeimpften Lebensmittel-Rohstoffes bei 30 bis 45°C erfolgt.

9. Verfahren nach einem oder mehreren der Ansprüche 1 bis 8, **dadurch gekennzeichnet, dass** die Inkubation unter anearoben Bedingungen durch Inkubation unter einer N₂, CO₂ und/oder H₂ Atmosphäre erfolgt.

10. Verfahren nach einem oder mehreren der Ansprüche 1 bis 9, **dadurch gekennzeichnet, dass** als Lebensmittel-Rohstoff Milch eingesetzt wird, die mit Glucose versetzt wird.

11. Fermentiertes Lebensmittel, herstellbar nach dem Verfahren gemäß einem der Ansprüche 1 bis 10.

12. Fermentiertes Lebensmittel nach Anspruch 11, **gekennzeichnet durch** wenigstens eines der nachfolgenden Merkmale:
- dass wenigstens ein weiterer Mikroorganismus als Starterkultur eingesetzt wird, der sich von dem Mikroorganismus gemäß einem oder mehreren der Ansprüche 1 bis 4 unterscheidet; und/oder
- dass es den Mikroorganismus gemäß einem oder mehreren der Ansprüche 1 bis 4 in einer nicht vermehrungsfähiger Form enthält; und/oder
- dass es wenigstens 10⁶ Einheiten von Mikroorganismen gemäß einem oder mehreren der Ansprüche 1 bis 4 pro Tagesverzehrmenge enthält.

## Claims

1. A method of producing a fermented food, wherein a food raw material is combined with a starter culture for fermentation, **characterized in that** at least one microorganism of the genus Bacteroides is used as starter culture, comprising the following steps:
- inoculating the food raw material with the starter culture; and
- incubating the inoculated food raw material under aerobic conditions at 30 to 50°C.

2. The method according to claim 1, **characterized in that** the microorganism has at least one cell surface structure which corresponds to a human carbohydrate structure.

3. The method according to claim 1 or 2, **characterized in that** at least one microorganism is added having one or more of the following features:
a. the microorganism has at least one cell surface structure which corresponds to a human carbohydrate structure which is a disease-specific antigen; and/or
b. the microorganism has at least one cell surface structure which corresponds to a human carbohydrate structure which is a tumor-associated antigen (TAA); and/or
c. the microorganism has at least one cell surface structure which corresponds to a human carbohydrate structure which is selected from the group of TF, Core-1, Tn, sialyl-Tn, sialyl-TF, Globo-H, Lewis-Y, sialyl-Lewis-A, sialyl-Lewis-X, polysialyic acid, Lewis-X, GM2, GD2, GD3, 9-O-acetyl GD3, GD3L, fucosyl GM1, fucosyl-GM1, Lewis-A, Lewis-B, sLac, sialylated type 1 chain, CA 19-9 antigen, CA 72-4 antigen and CA-50 antigen; and/or
d. the microorganism is selected from the Bacteroides-fragilis group and the species Bacteroides ovatus; and/or
e. the microorganism has at least one cell surface structure which corresponds to Core-1 and is bound by at least one, preferably two, Core-1 specific antibody which is selected from the group consisting of
Nemod-TF1
Nemod-TF2
A78-G/A7
HB-T1
HH8; and/or
f. the microorganism is bound by NEMOD-TF2 or A78-G/A7 and NEMOD-TF1, but not by the antibody A68-B/A11; and/or
g. the microorganism has at least one carbohydrate structure which is selected from the group of the carbohydrate structures no. 1, 2, 3, 4, and/or 5 of Fig. 2.

4. The method according to any one of the claims 1 to 3, **characterized in that** the microorganism of the genus Bacteroides is selected from the group consisting of AG6 (DSM 18726), MU1 (DSM 18728) and/or AG6 or MU1 homologous microorganisms which are **characterized in that** they belong to the genus Bacteroides and are bound by at least two Core-1 specific antibodies which are selected from the group consisting of
Nemod-TF1
Nemod-TF2
A78-G/A7
HB-T1
HH8.

5. The method according to one or more of the claims 1 to 4, **characterized in that** the microorganism of the genus Bacteroides is used as sole starter culture or in combination with at least one further starter culture.

6. The method according to one or more of the claims 1 to 5, **characterized in that** at least the microorganisms of the genus Bacteroides are present in the finished food in a form incapable to reproduce.

7. The method according to one or more of the claims 1 to 6, **characterized in that** the fermented product is pasteurized, sterilized and/or heated.

8. The method according to one or more of the claims 1 to 7, **characterized in that** the incubation of the inoculated food raw material takes place at 30 to 45°C.

9. The method according to one or more of the claims 1 to 8, **characterized in that** the incubation under anaerobic conditions takes place by incubating under a N₂, CO₂ and/or H₂ atmosphere.

10. The method according to one or more of the claims 1 to 9, **characterized in that** as food raw material milk is used to which glucose is added.

11. Fermented food, producible by the method according to one of claims 1 to 10.

12. The fermented food according to claim 11, **characterized by** at least one of the following features:
- that at least one further microorganism which differs from the microorganism according to one or more of the claims 1 to 4 is used as starter culture; and/or
- that it contains the microorganism according to one or more of the claims 1 to 4 in a form incapable to reproduce; and/or
- that it contains at least 10⁶ units of microorganisms according to one or more of the claims 1 to 4 per daily amount of consumption.

## Revendications

1. Procédé de fabrication d'un produit alimentaire fermenté, dans lequel on réunit une matière première de produit alimentaire avec une culture de démarrage de fermentation, **caractérisé en ce que** l'on utilise comme culture de démarrage au moins un microorganisme du genre Bactéroïdes, comprenant les étapes suivantes:
- inoculer ou ensemencer la matière première de produit alimentaire avec la culture de démarrage; et
- faire incuber la matière première de produit alimentaire inoculée ou ensemencée dans des conditions anaérobies à 30 à 50 °C.

2. Procédé selon la revendication 1, **caractérisé en ce que** le microorganisme présente au moins une structure de surface cellulaire, qui correspond à une structure d'hydrate de carbone humaine.

3. Procédé selon la revendication 1 ou 2, **caractérisé en ce que** l'on ajoute au moins un microorganisme, qui présente une ou plusieurs des caractéristiques suivantes:
a. le microorganisme présente au moins une structure de surface cellulaire, qui correspond à une structure d'hydrate de carbone humaine, qui est un antigène spécifique de maladie; et/ou
b. le microorganisme présente au moins une structure de surface cellulaire, qui correspond à une structure d'hydrate de carbone humaine, qui est un antigène associé à une tumeur (TAA); et/ou
c. le microorganisme présente au moins une structure de surface cellulaire, qui correspond à une structure d'hydrate de carbone humaine, qui est sélectionnée dans le groupe de TF, Core-1, Tn, Sialyl-Tn, Sialyl-TF, Globo-H, Lewis-Y, Sialyl-Lewis-A, Sialyl-Lewis-X, acide polysialique, Lewis-X, GM2, GD2, GD3, 9-O-acétyl GD3, GD3L, Fucosyl GM1, Fucosyl GM1, Lewis-A, Lewis-B, sLac, chaîne sialylée de type 1 (sialylated type 1 chain), antigène CA 19-9, antigène CA 72-4 et antigène CA-50; et/ou
d. le microorganisme est sélectionné dans le groupe Bacteroïdes-fragilis et l'espèce Bacteroïdes ovatus; et/ou
e. le microorganisme présente au moins une structure de surface cellulaire, qui correspond à Core-1 et qui est liée par au moins un, de préférence deux anticorps spécifiques Core-1, qui est sélectionné dans le groupe composé de
Nemod - TF1
Nemod - TF2
A78-G/A7
HB-T1
HH8; et/ou
f. le microorganisme est lié par NEMOD-TF2 ou A78-G/A7 et NEMOD-TF1, mais pas par l'anticorps A68-B/A11; et/ou
g. le microorganisme présente au moins une structure d'hydrate de carbone, qui est sélectionnée dans le groupe des structures d'hydrate de carbone n° 1, 2, 3, 4 et/ou 5 de la Figure 2.

4. Procédé selon l'une quelconque des revendications 1 à 3, **caractérisé en ce que** le microorganisme du genre Bacteroïdes est sélectionné dans le groupe composé de AG6 (DSM 18726), MU1 (DSM 18728) et/ou des microorganismes homologues de AG6 ou MU1, qui sont **caractérisés en ce qu'**ils appartiennent au genre Bacteroïdes et qu'ils sont liés par au moins deux anticorps spécifiques Core-1, qui sont sélectionnés dans le groupe composé de
Nemod - TF1
Nemod - TF2
A78-G/A7
HB-T1
HH8.

5. Procédé selon l'une quelconque des revendications 1 à 4, **caractérisé en ce que** l'on utilise le microorganisme du genre Bacteroïdes comme culture de démarrage unique ou en combinaison avec au moins une autre culture de démarrage.

6. Procédé selon une ou plusieurs des revendications 1 à 5, **caractérisé en ce qu'**au moins les microorganismes du genre Bacteroïdes sont présents dans le produit alimentaire terminé sous une forme incapable de proliférer ou de se multiplier.

7. Procédé selon une ou plusieurs des revendications 1 à 6, **caractérisé en ce que** l'on pasteurise, on stérilise et/ou on chauffe le produit fermenté.

8. Procédé selon une ou plusieurs des revendications 1 à 7, **caractérisé en ce que** l'on effectue l'incubation de la matière première de produit alimentaire inoculée à 30 à 45°C.

9. Procédé selon une ou plusieurs des revendications 1 à 8, **caractérisé en ce que** l'on effectue l'incubation dans des conditions anaérobies par incubation sous une atmosphère de N₂, CO₂ et/ou H₂.

10. Procédé selon une ou plusieurs des revendications 1 à 9, **caractérisé en ce que** l'on utilise comme matière première de produit alimentaire du lait, qui est mélangé avec du glucose.

11. Produit alimentaire fermenté, pouvant être fabriqué par un procédé selon l'une quelconque des revendications 1 à 10.

12. Produit alimentaire fermenté selon la revendication 11, **caractérisé par** au moins une des caractéristiques suivantes:
- on utilise comme culture de démarrage au moins un autre microorganisme, qui se distingue du microorganisme selon une ou plusieurs des revendications 1 à 4; et/ou
- il contient le microorganisme selon une ou plusieurs des revendications 1 à 4 sous une forme incapable de proliférer ou de se multiplier; et/ou
- il contient au moins 10⁶ unités de microorganismes selon une ou plusieurs des revendications 1 à 4 par quantité consommable journalière.
